# EUROPEAN PATENT APPLICATION

(11) **EP 1 536 613 A1**
(43) Date of publication of application: **01.06.2005**
(21) Application number: 04257243.8
(22) Date of filing: 23.11.2004
(51) Int. Cl.: H04L 29/08

(54) **Communication system**

(30) Priority: 25.11.2003 GB 0327408
(71) Applicant: Surfkitchen Inc., 8004 Zurich (CH)
(72) Inventor: Bal, Balaji, 8004 Zurich (CH)
(74) Representative: Beresford, Keith Denis Lewis

(57) **Abstract**

A method of server initiated download of information is described. When a server (5) determines that content (26,28) is stored which is to be made available to a remote device (1;2) the server (5) dispatches a signal to the appropriate remote device (1,2) in the form of a non HTTP message such as an SMS message which has a predefined format. When such a signal is received, this indicates to the remote device (1;2) that content to download exists. A browser program (14) on the remote device (1;2) then responds to the received message by forming a conventional HTTP link to the server (5) and requests location data identifying the location of content (26,28) to download from the server (5). When the browser program (14) receives the requested location data the browser program (14) utilises the location data to generate instructions to cause copies of the content (26;28) to be downloaded via the HTTP link.

## Description

The present invention relates to communications systems. In particular, the present invention relates to browser/server communication systems in which a server can initiate communication between a browser and a server. Embodiments of the present invention concern the pushing of content from a central server onto remote devices such as mobile cellular phones.

Conventionally in a communications system, browsers implement a client role initiating and requesting data from servers which provide data in response to the instructions from the clients. A typical system would be one where the browser creates a communications link with the server in the form of an http link. Once a link between a browser and a server has been established data can then be transferred via that link.

It has been appreciated that for certain types of application, it would be advantageous if a server were able to initiate communication to prompt the download of data by a browser.

Thus for example in the wireless application protocol WAP-167-ServiceInd-2001 031-A dated 31 July 2001 <available at http://www1.wapforum.org/tech/documents/WAP167ServiceInd-20010731-a.pdf>, a service indication content type is defined which provides a means for a server to notify a remote client that an external asynchronous event has occurred and indicate the location of a service can be loaded in order to react to that event. This is accomplished by the server sending a message to the remote client that informs the end user about the event, and a URI identifying where the appropriate service can be loaded. Thus for example, a message could read "You have new voicemail" and the URI included in the service indication would then point to a voicemail service where the mail messages could be downloaded from.

The service indication message can be of any suitable form which can be received by a remote device without the need for a pre existing communications link to be present. A typical form of message would be an SMS or text message.

Although sending a message to a remote client to identify the location of content to be downloaded in response to a server side event provides a means by which a server can push content onto the remote client, existing systems have a number of drawbacks.

One problem with sending a message such as a SMS message identifying content to be downloaded and a URI is that the remote client can not be certain that the message has been received from a trusted source. The existing system could therefore be abused by malicious individuals sending message for downloading unwanted programs such as computer viruses.

Further problems arise when there is a delay between the receipt of a message indicating the location of content to be downloaded and a request to download content from the identified location. This can cause errors because content has been deleted in the interim or alternatively can cause a remote client to download out of date information.

An alternative method for enabling a server to initiate communication with a browser is therefore desirable.

In accordance with one aspect of the present invention there is provided a method of client/server communication in a communication system operable to transmit requests from the client to the server utilising an http based communications link and to transmit requested content from the server to the client via said http link, the method comprising:
identifying, at the server, the availability of content to be made available to a client;
transmitting a message, from the server to the client via a communications link other than a conventional http based communications link, indicative of the existence of content to be downloaded;
utilising said client, in response to receipt of said message, to generate a conventional http communications link between said client and said server via said communication system;
transmitting a location request, from said client to said server via said generated communications link, requesting data identifying the location of content to be downloaded;
transmitting location data, from said server to said client via said generated communications link, identifying the location of available content;
transmitting a download request, from said client requesting to download content from a location identified by received location data; and
transmitting a copy of content stored at location identified in a received download request to said client via said generated communications link.

In another aspect of the present invention there is provided a remote device comprising:
a first communications module operable to receive data through a first communications channel; and
a second communications module responsive to receipt of a message in a predefined format via said first communications channel by said first communications module to establish a second communications channel and transmit a request for data identifying the location of content to download via said second communications channel, said second communications module being responsive to receipt of data identifying the location of content to download via said second communications channel to utilise said received location data to generate a download request for content stored at a location identified by the received location data.

In a further aspect of the present invention there is provided a server comprising:
a data store configured to store items of content;
a user database configured to store data associating remote devices with items of content to be made available to said remote devices;
a monitor module operable to monitor the storage of items of content in said data store and responsive to the determination of the storage of content identified as to be made available to a remote device by said user database to dispatch a predefined signal via a first communications channel to said remote device;
an identification module operable to receive location requests via a second communications channel from remote devices and responsive to receipt of a said location request to generate and dispatch via said second communications channel, location data identifying the location of content stored in said data store identified as to be made available by data stored in said user database; and
an output module operable to receive download requests identifying the location of content stored in said data store and responsive to receipt of a said request to output a copy of the content stored in said data store at the location identified in said received download request.

Further aspects and embodiments of the present invention will become apparent with reference to the following description and accompanying drawings in which:
Figure 1 is a schematic block diagram of a communications system embodying the present invention;
Figure 2 is a schematic diagram of data and messages transmitted between a remote device and a server of the communications system of Figure 1;
Figure 3 is a flow diagram of the processing performed by the server of the communications system of Figure 1;
Figure 4 is a schematic block diagram of client records stored within a client database on the server of the communications system of Figure 1;
Figure 5 is a schematic block diagram of data included in a content list generated by the server of the communications system of Figure 1;
Figures 6a and 6b are a flow diagram of the processing of a remote device of the communications system of Figure 1; and
Figure 7 is an exemplary illustration of a screen display of a remote device of the communications system of Figure 1 for selecting items of content to be downloaded.

### Overview of Communications System

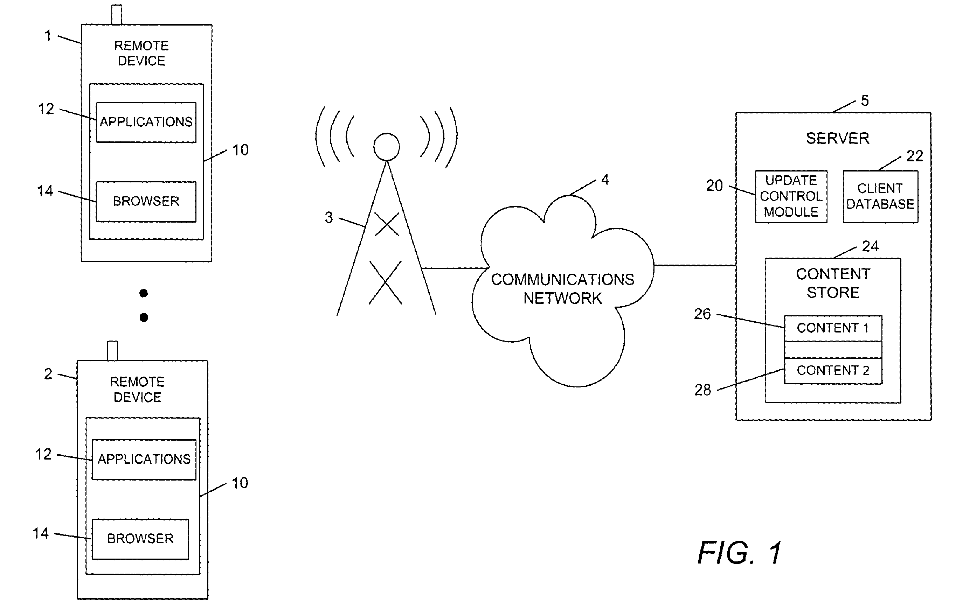

Referring to Figure 1, a communications system is provided comprising a plurality of remote devices 1, 2 such as mobile cellular telephones which can be connected via a radio link 3 and a communications network 4 to a server 5. Each of the remote devices 1, 2 has a memory 10 within which is stored a number of application programs 12 for controlling different functions of the remote device 1;2 and a browser program 14. The browser program 14 is a software program that is arranged to co-ordinate the functioning of a remote device 1; 2 when the remote device 1; 2 accesses remotely stored data on the server 5 via the radio link 3 and the communications network 4.

Stored within the server 5 is an update control module 20, a client database 22 storing records identifying the remote devices 1, 2 of the communications system and a content store 24. The content store 24 is a database arranged to store a number of items of content 26, 28 being data or application programs which users of their remote devices 1, 2 may wish to download into the memories 10 of the remote devices 1, 2. Typical content could be games, ring tones, images, video clips, news reports or e-mail messages

In use, the users of the remote devices 1, 2 are able to activate the browser program 14 in a conventional manner using a keyboard (not shown in Figure 1) of the remote device 1, 2. The browser program 14 then communicates via the radio link 3 and the communications network 4 to the server 5. In this embodiment the communication between the remote device 1; 2 and the server 5 is in the form of an http link. Once an http link between the remote device 1;2 and the server 5 via conventional ports assigned to transmitting and receiving http data such as port 80, has been generated the user of the remote device 1;2 can then cause the browser 14 to download data stored within the content store 24.

In addition to the conventional communication between a remote device 1; 2 and a server 5 where the browser program 14 initiates communication between a remote device 1; 2 and the server 5, the server 5 is also arranged to initiate communication between the server 5 and the remote devices 1, 2. More specifically, in this embodiment, the update control module 20 on the server 5 is arranged to monitor the client database 22 and the contents store 24 to determine when content 26, 28 relevant for a particular remote device 1, 2 has been stored. If the update control module 20 determines that relevant content has been stored, the update control module 20 then causes the content to be downloaded into the memory of the identified remote device 1, 2.

In accordance with the present invention, this server initiated download of information is initiated by the server 5 by sending a signal to a remote device 1; 2 which is to receive content. The signal dispatched by the server 5 is in the form of a non http message such as an SMS message which has a predefined format which indicates to the remote device 1;2 that content to download exists. The browser program 14 then responds to the received message by forming a conventional http link to the server 5 and requests content location data identifying the location of the content 26, 28 to download from the server 5. When the browser program 14 receives the requested content location data via the http link, the browser program 14 utilises the content location data generate instructions to cause copies of the content 26, 28 stored at the identified location to be downloaded via the http link.

Having the server 5 send an initial content update signal which indicates the existence of content to be downloaded from the server 5 but which does not indicate the location of that content gives rise to many advantages.

Firstly as the signal does not identify the location of any particular item of content, a single signal can be sent to a remote device to enable the remote device 1, 2 to download multiple items of content. The fact that a single signal can be sent reduces the amount of data which is transmitted to the remote device via the non http link.

Additionally, since data identifying the locations of content to be downloaded only needs to be generated after the browser program 14 has initiated a communications link between the remote device 1; 2 and the server 5, this data will identify current locations for content to be downloaded even when there is a delay between the sending of the initial content update signal and the initiating of a communications link by the browser program 14. The possibility that content from within the content store 24 is deleted in the interim between notification of the existence of content and the dispatch of a request to download content from a location and hence a requested item of content is no longer available is therefore reduced.

Further where the data identifying the location of items of content is only generated when a communication link has been created between a remote device 1; 2 and the server 5, the server 5 can ensure that the locations included in the data sent to a remote device 1; 2 identify only the latest versions of an item of content. Thus in this way out of date items of content never need to be downloaded. This makes the described system particularly suitable for dispatching items of content which are rapidly updated such as for example news or sport reports where old content can be rapidly superseded and a user will only wish to obtain the most current information.

The system described also has security advantages over existing systems. Thus for example, where data identifying the location of items of content is sent from the server 5 to a remote device 1;2 via an http link this link can be a secure http link. In such circumstance, the information as to the location of the content to be downloaded can not be accessed by unauthorised users.

Furthermore, since it is the browser program 14 of the remote device 1; 2 which initiates the secure link to a known server 5, the browser program 14 can know in advance that the information it is receiving as to where to download data is being obtained from a trusted source i.e. from the server 5 rather than any source capable of generating an SMS message. The dangers that malicious instructions to download content such as computer viruses are therefore reduced.

Finally, as will be described in greater detail later, by sending data identifying the locations of content to a browser 14, a user can be given the option of selecting which if any of a desired set of items of content are to actually to be downloaded. At the same time, the sending of messages via a non http link enables the server to inform a remote device 1, 2 of the existence of new content to download. The described system therefore provides an advantageous balance between the actions undertaken by the server 5 and at the remote device 1; 2. The server 5 can be arranged to inform the remote devices 1; 2 of all available items of content that are identified as being relevant for those remote devices 1, 2. Whereas the user of the remote device 1;2 can remain in control of what actual items of content are downloaded and hence enables a user to control the costs involved in making downloads onto the remote device 1;2.

### Overview of Transmission of Data

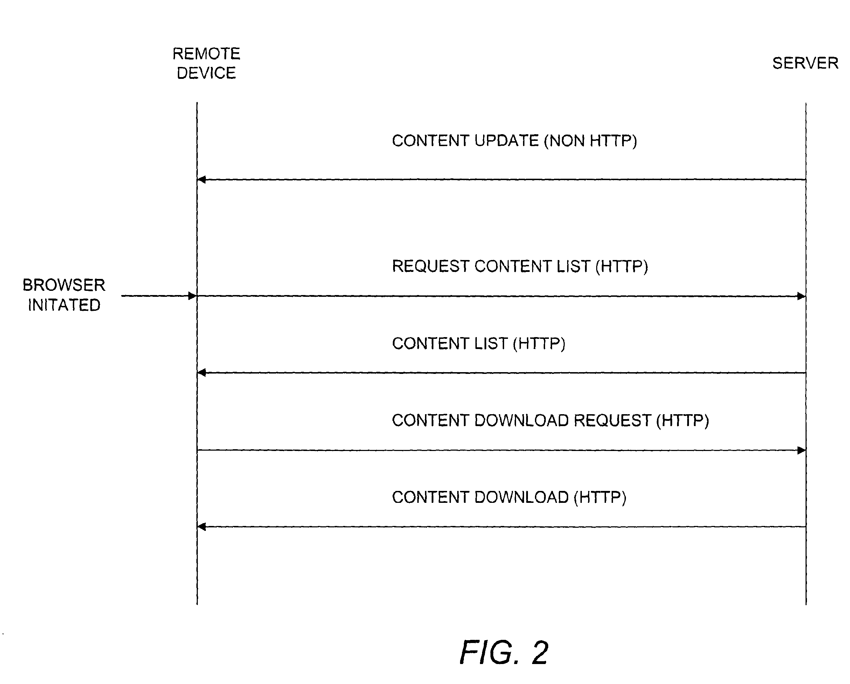

The transmission of data between the server 5 and a remote device 1; 2 will now be described in overview with the reference to Figure 2 which is a schematic diagram of the exchange of data between the server 5 and a remote device 1; 2 when downloading of content is initiated by the update control module 20 of the server 5.

In this embodiment, the update control module 20 informs a remote client 1; 2 of the existence of new items of content which are available to be downloaded, by sending a content update message in the form of an SMS message via the communications network 4 and the radio link 3 to the remote device 1; 2 which may wish to receive the identified content. The message sent by the server 5 comprises a message in a predefined format which indicates to the browser program 14 of a remote device 1; 2 that content 26,28 exists on the server 5 which can be downloaded.

When this SMS message is received by the remote device 1; 2 the message is stored in the memory 10 of the remote device 1; 2.

When the browser program 14 of that remote device 1; 2 is activated after an SMS message has been received by the remote device 1; 2, the browser program 14 then causes an http link to be formed between the remote device 1; 2 and the server 5 and dispatches a content list request to the server 5 via this http link through the radio link 3 and the communications network 4. This content list request comprises a request by the browser program 14 that the remote server 5 generates a content list identifying the content and the location of the content 26,28 which is available to be downloaded into the memory 10 of the remote device 1;2 from the content store 24.

When the server 5 receives a content list request from a remote device 1, 2, the update control module 20 utilises data within the client database 22 to identify what relevant content is to be made available to the remote device 1, 2 making the request and the location within the content store 24 of the identified items of content 26,28. The update control module 20 then generates a content list identifying the location of the content available to be downloaded and dispatches the generated content list via the http link formed between the server 5 and the remote device 1;2 making the request.

When a content list is received by the remote device 1; 2, the browser program 14 then generates one or more content download requests utilising the information in the received content list to request the download of the identified content from the identified locations in the content store 24 via the existing http link. When a content download request identifying the location of a particular item of content 26, 28 is received by the server, the update control module 20 causes a copy of the content from the identified location to be downloaded via the existing http link between the remote device 1; 2 and the server 5 into the memory 10 of the remote device 1; 2 making the request.

### Functioning of Server

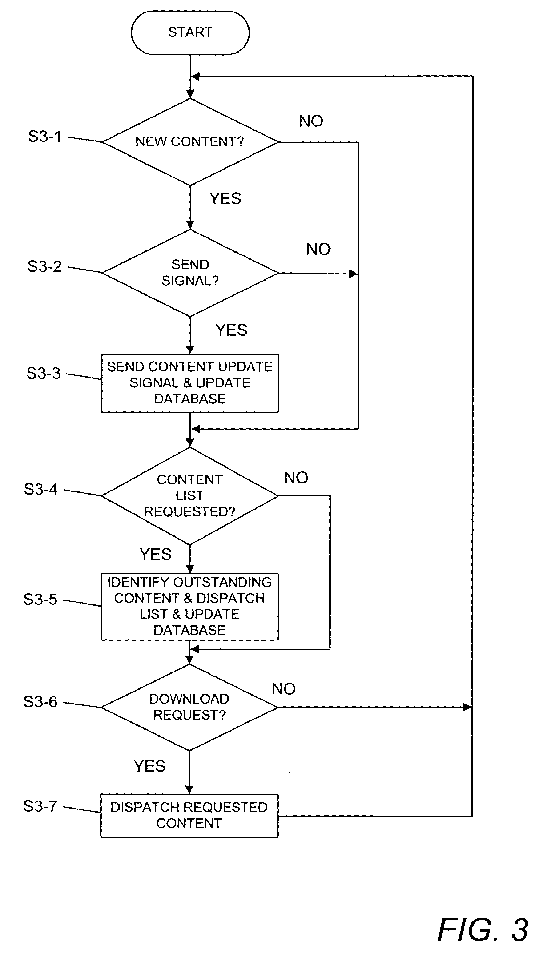

The processing of the update control module 20 of the server 5, will now be described in greater detail with reference to Figure 3, which is a flow diagram of the processing performed by the update control module 20.

Initially (S3-1) the update control module 20 checks to see whether any new content 26,28 has been stored within the content store 24 since the last time the update control module 20 checked the content store 24. If the update control module 20 determines that new content has been stored within the content store 24, the update control module 20 then utilises the client database 22 to determine (S3-2) whether a signal indicating the presence of new content download should be sent to any of the remote devices 1, 2.

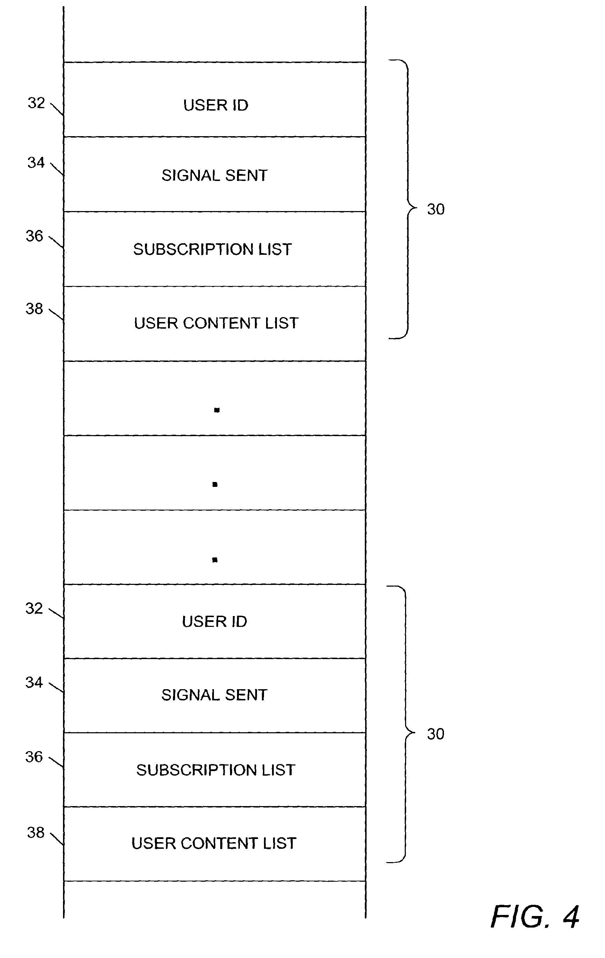

Figure 4 is a schematic block diagram of client records 30 stored within the client database 22 of the server 5. One client record 30 is stored in the client database 22 for each remote device 1;2 for which the server 5 is arranged to output content. In this embodiment each of the client records 30 comprises a user ID being a unique identification identifying a remote device 1;2 associated with the record 30, a signal sent flag 34, a subscription list 36 being a list of the services a user of the remote device 1;2 identified by the user ID 32 of the client record 30 has subscribed to and a user content list 38 being a list of items of content previously downloaded by the remote device 1;2 identified by the user ID 32 of the client record 30.

When the update control module 20 determines that a new item of content 26, 27 has been stored in the content store 24, the update control module 20 checks each of the subscription lists 36 of the client records 30 within the client database 22. If the subscription list 36 indicates that the newly identified item of content is an item that the user identified by the user ID 32 of the client record 30 has subscribed to, the update control module 20 then checks whether the signal sent flag 34 of the client record 30 is set to signal sent.

If this is not the case this will indicate that the client identified by the user identification number 32 has not previously been sent a signal indicating that there is content to be downloaded from the content store 24 and the update control module 20 sends (S3-3) a SMS message via the communications network 4 and the radio link 3 to the remote device 1; 2 identified by the client record 30 and updates that client record by amending the signal sent flag 34 to a value of signal sent.

The signal dispatched by the control update module 20 in this embodiment is in the form of a predefined SMS message which communicates to the browser program 14 of the remote device 1, 2 to which it is sent that there is content to be downloaded from the server 5.

After either content update signals have been sent to the remote devices 1; 2 that are to receive content (S3-3) or after the update control module 20 has determined either that no signals are to be sent (S3-2) or alternatively the update control module 20 determines that no new content has been stored in the content store (S3-1) the update control module 20 checks (s3-4) whether any requests for content lists have been received from any of the remote devices 1, 2.

If a request for a content list is received by the server 5, the update control module 20 then (S3-5) generates a content list identifying the locations of the content to be downloaded by the remote device 1; 2 that has requested a content list and dispatches the requested content list via the http link formed between that remote device 1; 2 and the server 5 when the remote device 1; 2 requested the content list from the server 5.

More specifically, when the browser program 14 of a remote device 1, 2 is activated, the browser program 14 causes the remote device 1, 2 to generate an http link via the radio link 3 and communications network 4 to the server 5. A request for a content list is then sent via the established link which, in this embodiment, includes data identifying the user ID 32 for the remote device 1, 2 from which a content list request is dispatched.

When this data is received by the server 5, the update control module 20 utilises the subscription list 36 of the client record 30 having the received user ID 32 to identify relevant items of content stored within the content store 26, 28. For each item of content 26,28 corresponding to a category in the subscription list 36 and which is not already included in the user content list 38 of the identified client record 30, the update control module 20 generates an entry in the content list being generated.

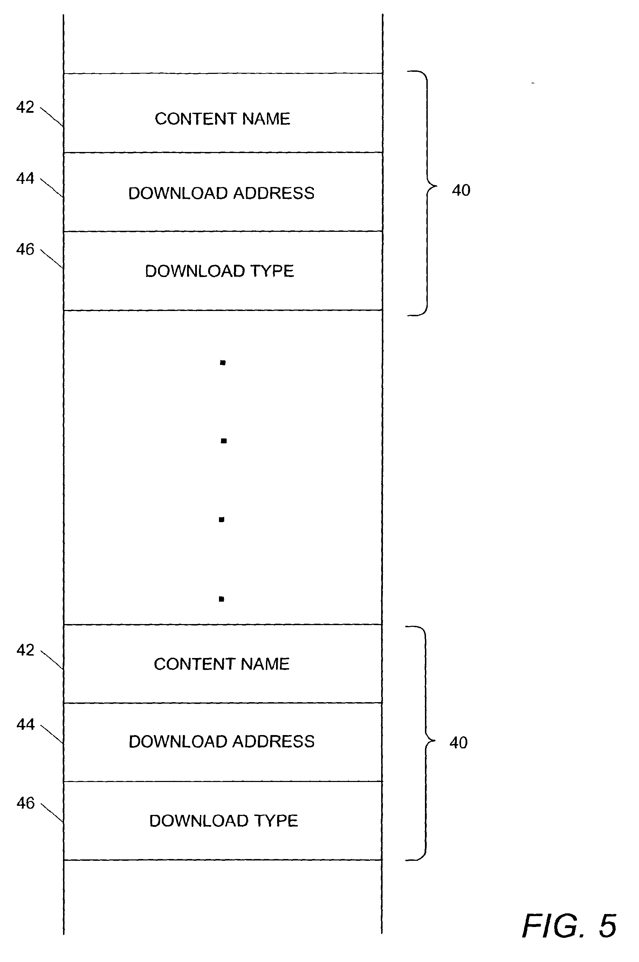

Figure 5 is a schematic block diagram of a content list generated by the update control module 20. The content list comprises a series of entries 40 each of which comprises a content name 42 being a text representation of the content 26,28 which could be downloaded, a download address 44 being the address from where the content identified by the content name 42 can be downloaded from the content store 24 and a download type 46 which in this embodiment is either set to user initiated or automatic. As will be described in the case of content having a download type 46 automatic in this embodiment, the browser program 14 is arranged to automatically download the identified content into memory 10.

Once a content list has been generated and dispatched by the update control module 20, the update control module 20 then causes the client record 30 for which a content list has been generated and dispatched to be updated so that the signal sent flag 34 is reset to indicate that no content update signal is outstanding for the remote device 1; 2 associated with the client record 30.

After either any required content lists have been generated (s3-5) or alternatively after it has been determined that no new content lists need to be generated, the server 5 then checks (S3-6) whether a download request has been received from the remote device 1;2 via a http link formed between a remote device 1;2 and the server 5.

If a download request is received, the download request will include data identifying the location of the content 26, 28 to be downloaded which will correspond to the download address 44 of an entry in the content list which was previously dispatched to the remote device 1, 2. When such a download request is received, the server 5 dispatches (S3-7) a copy of requested content located at the identified location in the content store 24 via the http link back to the remote device 1; 2. When the requested content is received, the content is stored in the memory 10 of the remote device 1; 2 for later use.

The update control module 20 then proceeds to check once again (S3-1) whether any new content has been stored in the content store 24 and dispatch further signals indicating that there is content to download as appropriate (S3-2-S3-3) before checking once again whether any requests for a content list (S3-4) or any download requests (s3-6) have been received from any of the remote devices 1, 2.

### Functioning of a Remote Device

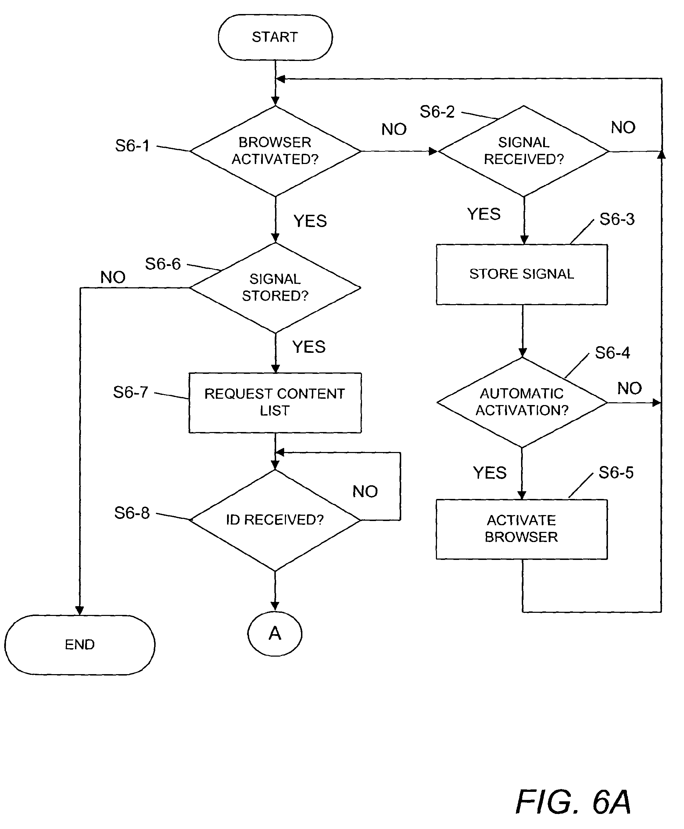

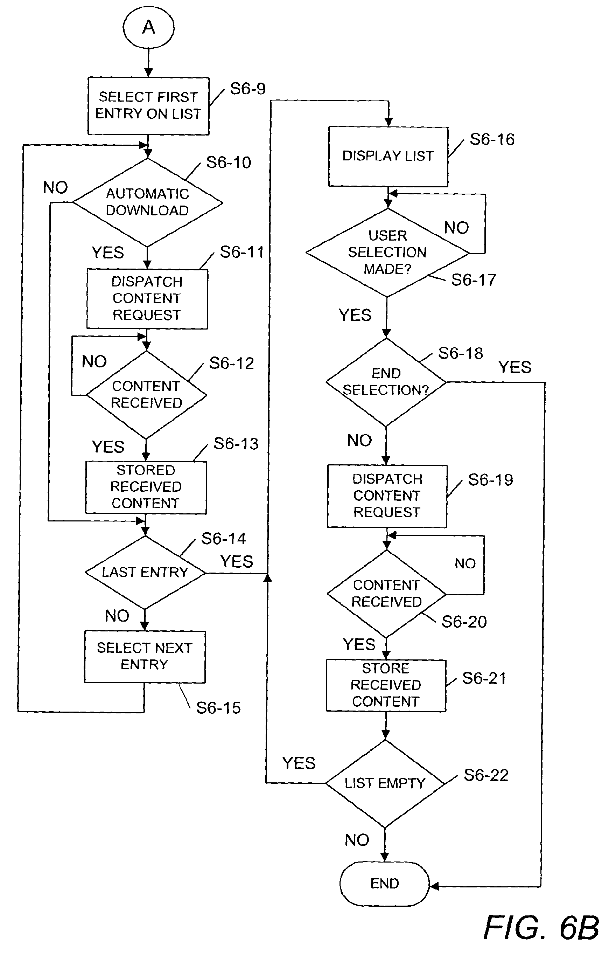

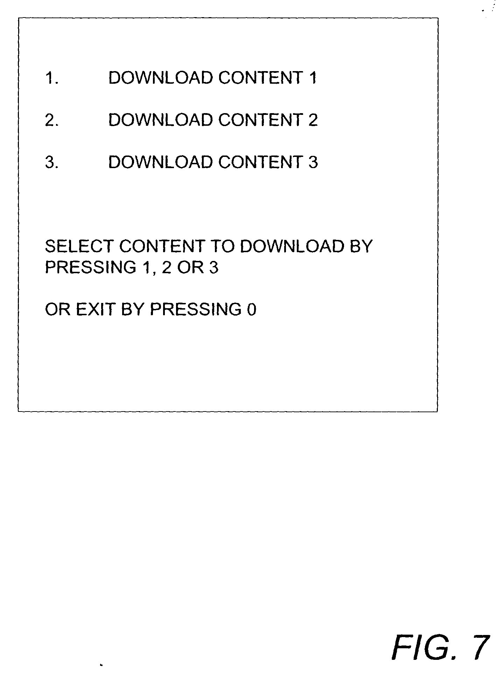

The processing of a remote device 1;2 in accordance with this embodiment of the present invention will now be described in greater detail with reference to Figures 6a and 6b and Figure 7.

Referring to Figure 6a and 6b which are a flow diagram of the processing of a remote device 1;2, initially (S6-1) the remote device 1, 2 checks whether the browser program 14 within the memory 10 of the remote device has been activated. In this embodiment, this activation of a browser program could either be the result of user activation through for example a keyboard on the remote device 1; 2 or alternatively could be in response to the storage of a SMS signal received by the radio link 3 which indicates that the browser program 14 of the remote device 1, 2 should be automatically activated.

If it is determined that the browser program 14 is not currently activated the remote device 1; 2 then checks (S6-2) whether any SMS signals has been received via the radio link 3. If an SMS signal is received the remote device then proceeds to store the signal (S6-3) in the message in the form of a text message. The remote device then (S6-4) checks whether the stored message is a predefined form of a message including an instruction to automatically activate the browser program 14. If this is the case, the remote device 1; 2 causes the browser program 14 to be activated (S6-5) .

After either the browser program 14 has been activated (S6-5) or alternatively after it has been determined by the remote device 1, 2 that the stored signal does not include an instruction to activate the browser program (S6-4) or that no SMS signal has been received (S6-2), the remote device then (S6-1) checks once again to whether the browser program 14 is now active.

Thus in this way, each remote device 1, 2 is arranged to receive and store SMS messages received by the radio link 3 in the memory 10 of the remote device 1, 2. Additionally, where the received message is an instruction to automatically activate the browser program 14, the remote device 1; 2 is caused to activate the browser program 14.

When the remote device 1, 2 determines that (S6-1) the browser program 14 has been activated, the browser program 14 then (S6-6) checks whether any SMS messages stored within the memory 10 of the remote device 1, 2 is an SMS message sent from the server 5 indicating that new content for the remote device 1, 2 has been stored within the content store 24. Such a message will comprise a text message in a predefined format which is recognised by the browser program 14 as indicating that there is content to be downloaded.

If the browser program 14 determines that a content update message in the required predetermined format is stored within the memory 10 of the remote device 1, 2 the browser program 14 then (S6-7) initiates contact with the server 5 via the radio link 3 and the communications network 4. This contact is made in the form of a http link by which the browser program 14 sends to the server 5 a request for a content list.

The browser program 14 then waits (S6-8) until the requested content list is received via the http link to the server 5. When the requested content list is received it will comprise a number of entries 40 each comprising a content name 42, a download address 44 identifying the location within the content store 24 where the content identified by the content name can be downloaded and a download type 46.

When a content list is received, the browser program 14 proceeds to select (S6-9) the first entry from the list and checks (S6-10) whether the download type 46 of the selected entry indicates that the content is to be automatically downloaded. Typical content which might be automatically downloaded would be software patches for existing applications 12 already stored in the memory 10 of the remote device. If the browser program 14 determines that an entry has a download type 46 set to automatic the browser program 14 then generates and dispatches (S6-11) a download request via the existing http link to the server 5 requesting a download of content from the address corresponding to the download address 44 of the entry 40 being processed.

After a download request has been generated and dispatched the browser program 14 then waits (S6-12) for the requested content to be dispatched by the server 5 via the http link with the server 5. When the download is eventually received, via this link the content is then stored (S6-13) in the memory 10 of the remote device 1; 2 and the browser program 14 then checks (S6-14) whether the final entry 40 in the content list received from the server 5 has been reached.

If the final entry 40 has not been reached, the next entry 40 in the content list is selected (S6-15) for processing and the browser program 14 determines (S6-10) whether the next entry 40 has a download type 46 set to automatic and if so proceeds to download the content (S6-11-S6-13) identified before checking once again (S16-14) whether the final entry in the content list has been reached.

Eventually, all of the items of content corresponding to entries 40 in the content list received from the server 5 which have a download type 46 set to automatic will have been requested and downloaded. At this point, the browser program 14 then (S6-16) proceeds to generate and display a user interface enabling a user to select which of the other items of content identified by entries 40 in the record content list should be downloaded.

In this embodiment, the user interface is generated utilising the content name data 42 included in each of the entries 40 in the content list received from the server 5 which have not yet been downloaded. More specifically, the browser program 14 proceeds to generate a user interface where a user can select items to download by displaying the content name data for the items which can be downloaded.

Figure 7 is an exemplary illustration of a user display for three items of content in which a user is able to select to download content 1, 2 or 3 by pressing an appropriate numerical key or to exit the program by pressing 0.

Once a user interface enabling a user to select items of content to be downloaded has been displayed, the browser program 14 then waits (S6-17) for a user selection to be made.

When a user selection has been made the browser program 14 then checks (S6-19) whether the user has exited the browser program 14 or has indicated they wish to download one of the identified items of content. If the exit option has been selected the processing of the browser program 14 ends.

If one of the download content options has been selected, the browser program 14 proceeds (s6-18) to dispatch a content request via the http link formed between the remote device 1; 2 and the server 5 to download content from the address identified by the download address 44 of the entry in the content list having a content name 42 corresponding to the user selection.

The browser program 14 then waits (S6-20) until the requested item of content is dispatched from the server 5 to the remote device 1; 2. When the requested content has been received the browser program 14 then stores (S6-21) the requested content within the memory 10 of the remote device 1;2 and then checks (S6-22) whether all of the items on the content list have now been downloaded. If this is the case processing of the browser program 14 ends. Otherwise, the browser program 14 proceeds to display (S6-16) a user interface for making further selections of content to download.

### Modifications and Amendments

Although in the above described embodiment, reference has been made to the use of SMS messages and an http link, it will be appreciated that the present invention can be implemented utilising any two types of communication where one type is suitable for sending an initial instruction that data for download exists without the need for a pre-existing communications channel between a server and a remote device and the other type is suitable for the transfer of data between a remote device and a server whilst a communications channel is maintained between the remote device and server.

In the case of the above described embodiment, this is achieved by the remote devices 1, 2 being arranged to receive SMS messages at any time. When an SMS message in a predefined format is received, this then prompts the remote device 1; 2 to generate an http communications link and request data identifying the location of a download via the generated link.

In other embodiments, the remote devices 1; 2 could be arranged to monitor for the receipt of a predefined message via any predefined port. Thus for example a remote device 1; 2 could be arranged to monitor for receipt of http messages via a non-standard http port such as port 1024. If a predefined message was received via that port the remote device 1; 2 could be arranged to respond to receipt of such a message by establishing a connection to a server 5 via a conventional http link using the normal http port, port 80.

It will also be appreciated that the present invention could be implemented utilising any suitable type of message format. Thus for example data could be transmitted and received using protocols such as Transfer Protocol/Internet Protocol (TCP/IP), File Transfer Protocol (FTP), Multimedia Message System (MMS) or Universal Message System (UMS), etc.

It will also be appreciated that in other embodiments of the present invention, a remote device 1; 2 could be arranged to receive a number of different types of predefined messages which would instruct the remote device to access a server 5 using a particular protocol for downloading data.

Although in the above embodiment, a system has been described in which remote devices access a single server to obtain information as to the location to download data, in other embodiments, more than one server could be provided and an initial instruction sent to a remote device could indicate which server a remote device should contact to obtain download location information.

Alternatively, in another embodiment, separate servers could be provided, one to generate instructions as to the existence of content to be downloaded and to output data identifying the location of data to be downloaded and another server to actually store the data for download. In such a system after a communications link had been established between a remote device and a first server and location information had been sent to the remote device via that communications link, a second communications link would then need to be established with the second server when data from identified locations was to be downloaded.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source or object code or in any other form suitable for use in the implementation of the processes according to the invention. The carrier can be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When a program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1. A method of transmitting data identifying the location of content available to be downloaded from a server onto a remote device via a communications system, the method comprising:
identifying, at the server, the availability of content to be made available to a client;
transmitting a signal in a predefined format from the server to the client via a first communications link;
utilising said client, in response to receipt of said signal, to establish a second communications link between said client and said server via said communication system;
transmitting a location request requesting data identifying the location of content to be downloaded from said client to said server via said second communications link; and
transmitting location data identifying the location of available content from said server to said client via said established communications link.

2. A method in accordance with claim 1 wherein said first communications link comprises a non- http based communications link and said second communications link comprises an http based communications link.

3. A method in accordance with claim 1 or 2 wherein said signal sent via said first communications link comprises an SMS message.

4. A method in accordance with claim 1, 2 or 3 wherein said second communications link comprises a secure http based communications link

5. A method in accordance with any preceding claim wherein said identifying the availability of content to be made available to a client comprises:
storing data identifying types of content to be made available to a client;
monitoring the storage of new content; and
utilising said stored data to determine whether newly stored content is to be made available to a client.

6. A method in accordance with any preceding claim further comprising:
monitoring at the server for the receipt of a location request; and
preventing the transmission of a signal in a predefined format if a said signal has previously been transmitted to a client and no location request has been received from said client since said transmission of said signal.

7. A method in accordance with any preceding claim, wherein said utilisation of said client comprises:
determining whether a signal in said predefined format has been received via said first communications link; and
establishing a second communications link between said client and said server via said communication system in response to the determination that a said signal has been received.

8. A method in accordance with claim 7, wherein said determination of whether a signal in said predefined format has been received is performed whenever said client receives a signal via said first communications link.

9. A method in accordance with claim 7, wherein said determination of whether a signal in said predefined format has been received is performed when a browser program provided on said client is activated.

10. A method in accordance with any preceding claim, further comprising:
determining, at said server, in response to receipt of a location request via said second communications link, the location of content to be made available to a client; and
generating location data identifying the determined location of content to be made available to a client.

11. A method in accordance with claim 10 wherein said generation of location data comprises generating location data identifying the locations of a plurality of items of content to be made available to a client.

12. A method of downloading content from a server onto a remote device via a communications system, the method comprising:
transmitting data identifying the location content available to be downloaded from a server onto a remote device via a communications system in accordance with any preceding claim;
transmitting a download request, from said client requesting to download content from a location identified by received location data; and
transmitting a copy of content stored at location identified in a received download request to said client via said communications system.

13. A method in accordance with claim 12 wherein said transmission of a download request and said transmission of a copy of content are performed via said second communications link.

14. A method in accordance with claim 12 or 13, further comprising automatically generating a download request at said client in response to receiving location data via said second communications link.

15. A method in accordance with claim 12 or 13, wherein said location data further comprises data identifying said content, the method further comprising:
generating a user interface at said client enabling a user to input instructions to download identified content utilising data identifying said content received via said second communications link; and
generating a download request to download content selected utilising said user interface.

16. A remote device comprising:
a first communications module operable to receive data through a first communications channel;
a second communications module operable to transmit and receive data through a second communications channel; and
a control module responsive to receipt of a message in a predefined format via said first communications channel by said first communications module to cause said second communications module to establish a second communications channel to a server and to transmit via said second communications channel to said server, a request for data identifying the location of content to download, said second communications module being responsive to receipt of data identifying the location of content to download via said second communications channel to utilise said received location data to generate a download request for obtaining content stored at a location identified by the received location data.

17. A remote device in accordance with claim 16, wherein said first communications module is operable to receive data through a non-http based communications link and said second communications module is operable to transmit and receive data through an http based communications link.

18. A remote device in accordance with claim 16 or 17 wherein said first communications module is operable to receive SMS messages.

19. A remote device in accordance with claim 16, 17 or 18 wherein said second communications module is operable to transmit and receive data via a secure http based communications link.

20. A remote device in accordance with any of claims 16 to 19, wherein said control module is operable to determine whether a signal in said predefined format has been received whenever said first communications module receives data.

21. A remote device in accordance with any of claims 16 to 19, wherein said control module is operable to determine whether a signal in said predefined format has been received whenever said second communications module is activated.

22. A remote device in accordance with any of claims 16 to 21 wherein said second communications module is arranged to generate a download request automatically in response to receiving location data via said second communications link.

23. A remote device in accordance with any of claims 16 to 21, wherein said second communications module is responsive to receipt of location data including data identifying content available to be downloaded to generate a user interface enabling a user to input instructions to download identified content and responsive to the input of instructions to generate a download request to download content selected utilising said generated user interface.

24. A remote device in accordance with any of claims 16 to 23, wherein said remote device comprises a mobile cellular phone.

25. A server comprising:
a content store configured to store items of content;
a user database configured to store data associating remote devices with content to be made available to said remote devices;
a monitor module operable to monitor the storage of items of content in said content store and responsive to the determination of the storage of content identified as to be made available to a remote device by said user database to dispatch a predefined signal via a first communications channel to said remote device; and
an identification module operable to receive location requests via a second communications channel from remote devices and responsive to receipt of a said location request to generate and dispatch via said second communications channel, location data identifying the location of content stored in said content store identified as to be made available by data stored in said user database.

26. A server in accordance with claim 25 wherein said monitor module is operable to dispatch signals via a first communications channel comprising a non-http based communications link and said identification module is operable to dispatch location data via a second communications channel comprising an http based communications link.

27. A server in accordance with claim 25 or 26 wherein said monitor module is operable to send signals as SMS messages.

28. A server in accordance with claim 25, 26 or 27 wherein identification module is operable to dispatch location data via a secure http based communications link.

29. A server in accordance with any of claims 25-28, further comprising an output module operable to receive download requests identifying the location of content stored in said content store and responsive to receipt of a said request to output a copy of the content stored in said content store at the location identified in said received download request.

30. A server in accordance with claim 29, wherein said monitor module is operable to monitor said output module for the receipt of location requests and prevent the dispatch a predefined signal via a first communications channel to a remote device if a said signal has previously been transmitted to a remote device and no location request has been received from said remote device since said transmission of said signal.

31. A server in accordance with claim 29 or 30 wherein said output module is responsive to receipt of a location request to determine the location of content to be made available to a remote device and to generate and output location data identifying the determined location of content to be made available to a remote device.

32. A server in accordance with any of claims 29 to 31 wherein said output module is operable to generate and output location data identifying the locations of a plurality of items of content to be made available to a remote device.

33. A server in accordance with any of claims 29 to 32 wherein said output module is operable to transmit a copy of content to a remote device via said second communications channel in response to receipt of a download request received via said second communications channel.

34. A communications system comprising:
a server in accordance with any of claims 25 to 33;
a remote device in accordance with any of claims 16 to 24; and
a communications network operable to provide a first and a second communications channel for transmitting data between said server and said remote device.

35. A computer readable storage medium storing computer implementable instruction for causing a programmable computer to become configured as a server in accordance with any of claims 25 to 33 or as a remote device in accordance with any of claims 16 to 24.
